# EUROPEAN PATENT APPLICATION

(11) **EP 1 939 012 A2**
(43) Date of publication of application: **02.07.2008**
(21) Application number: 07111748.5
(22) Date of filing: 04.07.2007
(51) Int. Cl.: B60B 7/00, B60B 7/01

(54) **Protective cover for vehicle rims**

(30) Priority: 28.12.2006 IT TO20060928; 01.03.2007 IT TO20070031 U
(71) Applicant: Groppo, Lazzaro, 12040 Sanfre' (CN) (IT)
(72) Inventor: Groppo, Lazzaro, 12040 Sanfre' (CN) (IT)
(74) Representative: Robba, Pierpaolo

(57) **Abstract**

A protective cover for vehicle rims, comprising a member (213) reproducing the pattern of the rim face to be protected, and securing means (215) for holding said member (213) in contact with the rim, said securing means being formed for instance by an adhesive, a double-adhesive tape, brackets or the like.. According to the invention, the member is readily replaceable when it is worn out and it does not substantially modify the aesthetic aspect of the original rim.

## Description

The present invention concerns a protective cover for vehicle rims.

In the field of two- and four-wheel motor land vehicles, the use of rims made of light alloy, for instance aluminium alloy, is known.

Light alloy rims have become of common use with time for meeting both technical and aesthetic requirements.

Indeed, light alloy is by definition lighter than steel plate by which conventional rims are made, and thus it enables reducing the weight of unsuspended masses in vehicles, thereby increasing roadholding and comfort.

In comparison to steel, moreover, light alloy allows manufacturing particularly audacious shapes, while maintaining high robustness and rigidity, and thus it allows obtaining aesthetically more appealing rims.

Often, light alloy rims also undergo chromium plating, or other surface treatments, intended to confer a particular brightness or colour.

One of the merits of light alloy rims, and one of the main reasons why they are chosen by an ever-increasing number of vehicle users, is therefore related with the particularly appealing aesthetic appearance.

Deterioration of the surfaces of light alloy rims due to shocks and to corrosion caused by substances present on the roads, such as antifreeze salt, is of course a problem, the attempted solutions to which have not proven particularly effective.

The prior art solutions substantially rely either on a rather coarse protective cover applied on the rim, or on a coating applied to its surface.

A solution of the first kind is found e.g. in US 3,724,905, which discloses a flat cover of transparent plastics, applied by means of a circular frame to the rim to be protected.

That solution has the drawback of being fragile and aesthetically unpleasant, since it sensibly modifies the aesthetic appearance of the rim, whereas the aesthetic appearance is just the feature one wishes to maintain.

A solution of the second kind is found e.g. in WO 98/18855, which discloses a silicone-based composition that can be used for protecting vehicle rims of alloy from corrosion.

However, those solutions do not wholly solve the above-mentioned problem, since the layer of protective material is anyway subjected to abrasion, which can remove a part thereof, thereby exposing again the rim material to the risk of corrosion.

Thus, it is an object of the invention to provide a solution to the problem of how to maintain the pleasantness of rims with time, and not only of rims made of light alloy, without altering the aesthetic impression originally caused by the rim.

It is another object of the invention to provide a protective cover for light alloy rims, which is easy and cheap to manufacture and which therefore can be produced on a large scale, in a great number of models, to meet the market requirements.

It is a further object of the invention to provide a protective cover for light alloy rims, which does not demand complex securing means for being mounted on the rims, and which can be easily removed without damaging the rims.

The above and other objects are achieved by the cover according to the invention, as claimed in the appended claims.

Advantageously, according to an embodiment of the invention, the cover adheres to the outer face of the rim and is equipped with securing means enabling the cover to be firmly held against the rim, thereby preventing the cover from becoming detached during use.

Advantageously, according to a second, alternative embodiment of the invention, the cover is made so that it remains slightly spaced apart from the rim surface, at least at some locations, thereby enabling removal of dirt possibly deposited between the cover and the rim.

Moreover, since the cover according to the invention is preferably transparent, it allows keeping substantially unchanged the aesthetic qualities of the rim to which the cover is applied.

Advantageously, the cover according to the invention reproduces as accurately as possible the pattern of the outer rim face and covers a substantial portion thereof. Moreover, the cover is readily replaceable, so that the initial pleasantness of the rim can be restored either by removing the cover or by providing a new cover, when the old one is worn out.

Advantageously, the invention can be applied both to rims of vehicles with four or more wheels, in which case only the outer rim face that is visible during use will generally be protected by the protective cover, and to wheels of two-wheel vehicles, in which case the cover will be applied to both rim faces.

Some non-limiting exemplary embodiments of the cover according to the invention will be described in more detail hereinafter with reference to the accompanying Figures, in which:
- Fig. 1 shows the side profile of a generic light-alloy rim for a vehicle wheel;
- Fig. 2a is a schematic plan view of a rim for a vehicle wheel, to which the cover according to a first embodiment of the invention has been applied;
- Fig. 2b is a cross-sectional view taken along line II-II of Fig. 2a;
- Fig. 2c is an enlarged view of part of the view of Fig. 2b;
- Fig. 2d is a perspective view of the securing bracket of the cover shown in Fig. 2a;
- Fig. 2e is a view similar to Fig. 2b, with the securing bracket removed;
- Fig. 2f is a view similar to Fig. 2b, with the securing bracket partially mounted;
- Fig. 2g is a perspective view of the securing bracket of the cover shown in Fig. 2a, according to a variant embodiment;
- Fig. 3a is a schematic plan view of a rim for a vehicle wheel, to which the cover according to a second embodiment of the invention has been applied;
- Fig. 3b is a cross-sectional view taken along line III-III of Fig. 3a;
- Fig. 3c is a perspective view of the securing bracket of the cover shown in Fig. 3a;
- Fig. 4a is a cross-sectional view of the means for securing the cover, according to a third embodiment of the invention;
- Fig. 4b is a perspective view of the securing bracket shown in Fig. 4a;
- Fig. 5a is a schematic plan view of a rim for a vehicle wheel, to which the cover according to a fourth embodiment of the invention has been applied;
- Fig. 5b is a cross-sectional view taken along line V-V of Fig. 5a;
- Fig. 6a is a schematic plan view of a rim for a vehicle wheel, to which the cover according to a fifth embodiment of the invention has been applied;
- Fig. 6b is a cross-sectional view taken along line A-A of Fig. 6a;
- Fig. 7a is a cross-sectional view of the means for securing the cover, according to a sixth embodiment of the invention;
- Fig. 7b is a perspective view of the securing bracket shown in Fig. 7a;
- Fig. 8a is a schematic plan view of a cover according to a seventh embodiment of the invention;
- Fig. 8b is a cross-sectional view taken along line VIIIa-VIIIa of Fig. 8a;
- Fig. 8c is a schematic plan view of a rim for a vehicle wheel, to which the cover according to Fig. 8a has been applied;
- Fig. 8d is a cross-sectional view taken along line VIIIc-VIIIc of Fig. 8c.

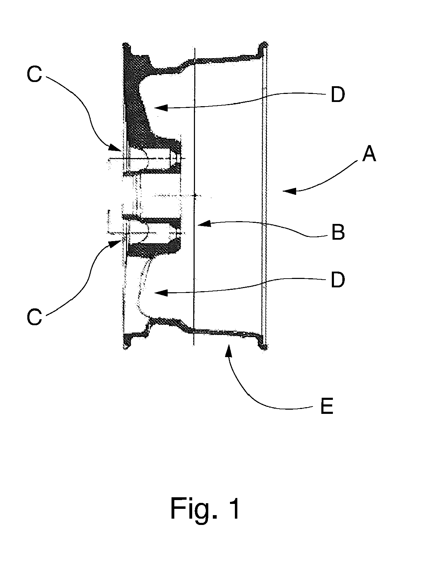

Referring to Fig. 1, the side profile of a generic rim A for a vehicle, e.g. a rim of light aluminium alloy, is schematically shown. The rim comprises, in radial direction from the centre to the periphery: a central region B for mounting the rim onto the vehicle hub, which region has bores C for the passage of screws; a set of radially diverging spokes D; and a channel E where the tyre can be mounted.

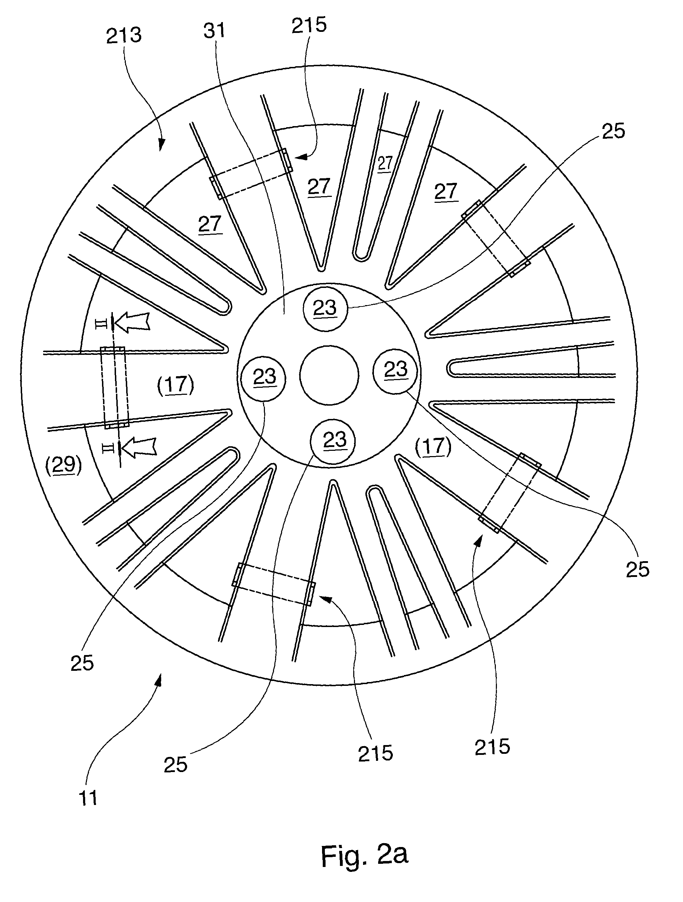

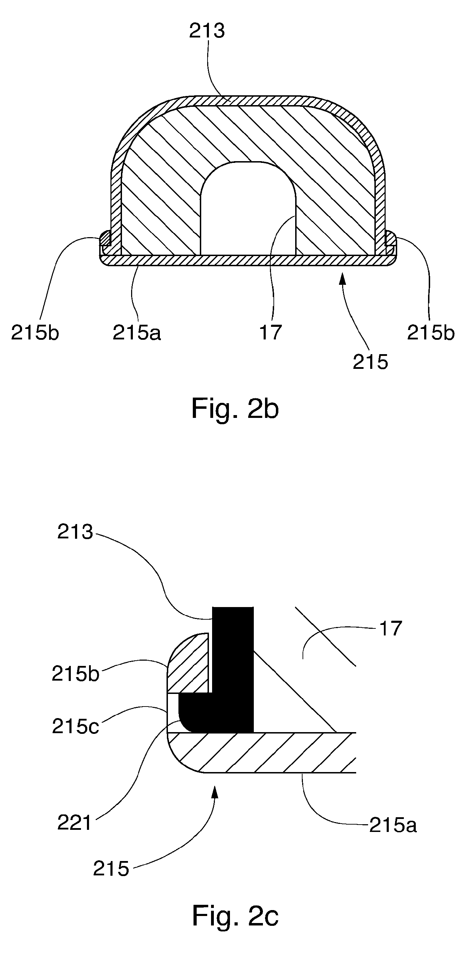

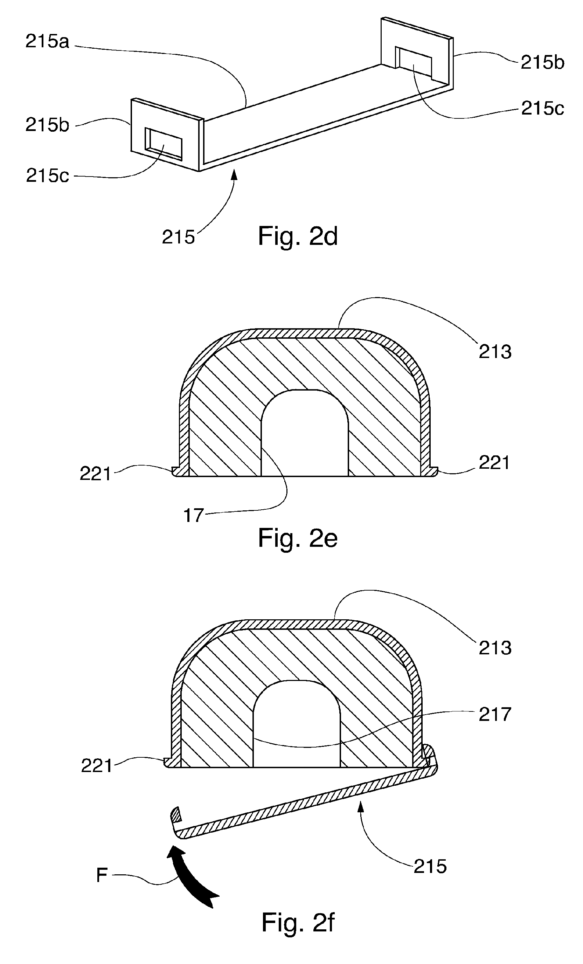

Referring to Fig. 2a, there is schematically shown a rim 11, e.g. a rim of aluminium alloy, to which a protective cover according to a first embodiment of the invention is applied.

According to that first embodiment of the invention, the protective cover comprises a member 213 that is held against rim 11 by a plurality of brackets 215, which encompass respective spokes 17 of rim 11 and engage member 213.

According to the invention, member 213 is made so as to reproduce as accurately as possible the pattern of the rim to which it is to be applied, and thus it substantially adheres to the rim surface while leaving the empty regions uncovered. Such member 213 can be made of a single piece or of two half-discs or of a plurality of segments.

Thus, member 213 is superimposed to spokes 17 and to peripheral edge 29 defining the channel for mounting the tyre, and it leaves empty regions 27 between spokes 17 uncovered.

Such a feature allows considerably reducing the risk of breakings of member 213, since the latter is in contact with the rim surface substantially everywhere.

That feature of the invention can be better appreciated with reference to Figs. 2b to 2f, where the shape of brackets 215 and the manner in which they are mounted can also be seen.

Referring in particular to the above Figures, each bracket 215 comprises a substantially U-shaped rectilinear body in which a central portion 215a and two end portions 215b are defined, each end portion having a window 215c that can be engaged by a respective tooth 221 of a plurality of teeth provided along the perimeter of member 213.

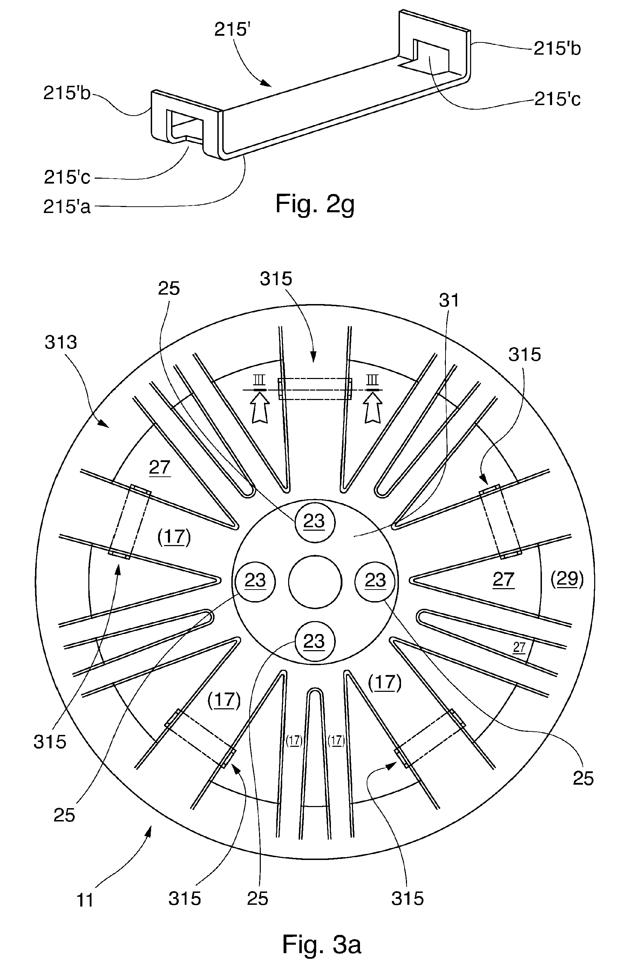

Referring to Fig. 2g, a bracket 215' made in accordance to a variant of this first embodiment of the invention is shown, where each of the windows 215'c provided at end portions 215'b partially extends also along central portion 215'a.

This variant embodiment mainly aims at ensuring a greater engagement between member 213 and brackets 215'.

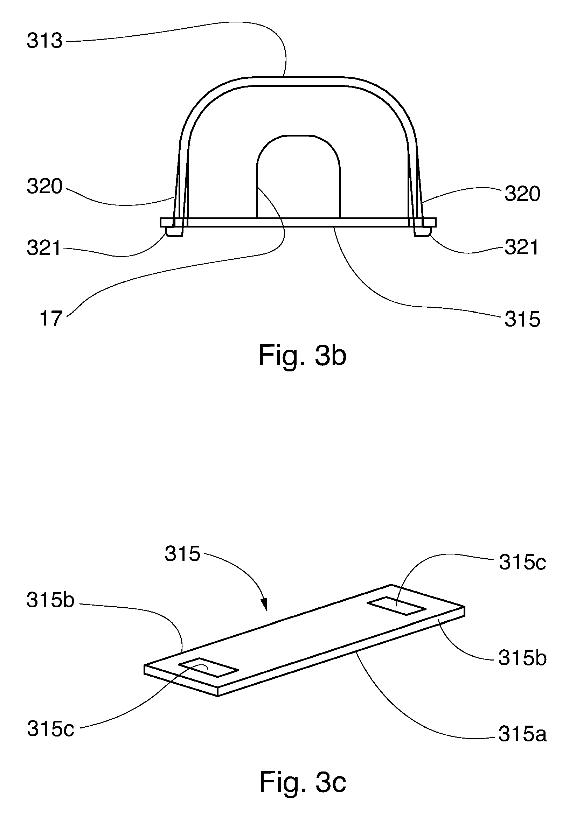

Referring to Figures 3a to 3c, a second embodiment of the invention is shown, where member 313 is held against the surface of rim 11 by a plurality of flat brackets 315 equipped with a pair of windows 315c located at ends 315b of central body 315a. Member 313 is correspondingly equipped with a plurality of legs 320 extending beyond spokes 17 of rim 11 and comprising each an engagement tooth 321 arranged to be received in a respective window 315c of bracket 315.

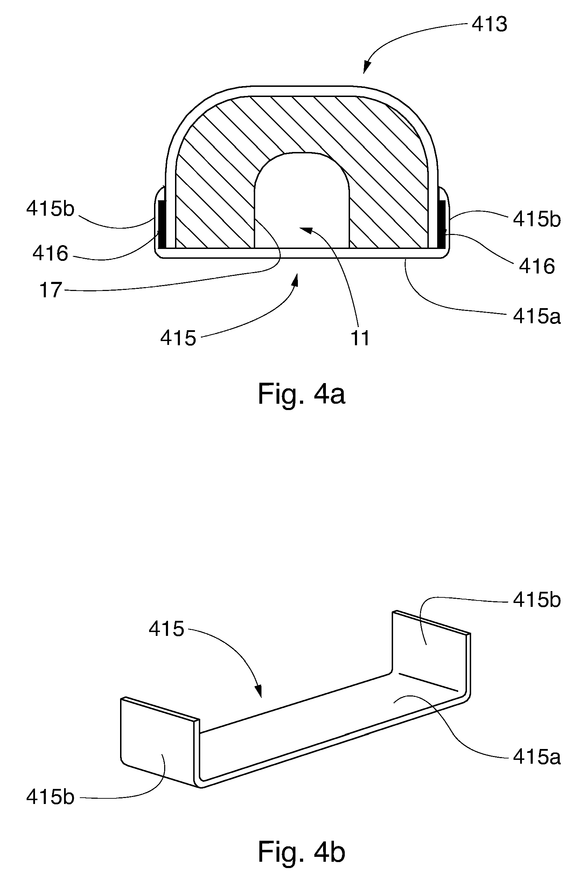

Referring to Figs. 4a and 4b, there are shown the means for securing the protective cover according to a third embodiment of the invention, where member 413 is held against rim 11 by U-shaped brackets 415 in which a central body 415a and two bent end portions 415b are defined. According to that embodiment, brackets 415 are joined to member 413 by joining areas 416, defined at end portions 415b by means of a bonding agent, a double-adhesive tape, a strip of Velcro or the like.

According to the invention, brackets 215, 215', 315 and 415 are preferably made of plastics or metal and preferably they are slightly resilient in order to firmly hold member 13 against rim 11, while enabling at the same time a slight deformation of the brackets themselves during mounting, which substantially takes place with the movement indicated by arrow F in Fig. 2f.

According to the invention, in order to secure the protective cover to the rim, further to the brackets described above, an adhesive applied between the cover and the surface of rim 11, or other means intended to hold the cover against the rim, such as plug-in push-buttons, strips of double-adhesive tape, strips of Velcro and the like, can be provided.

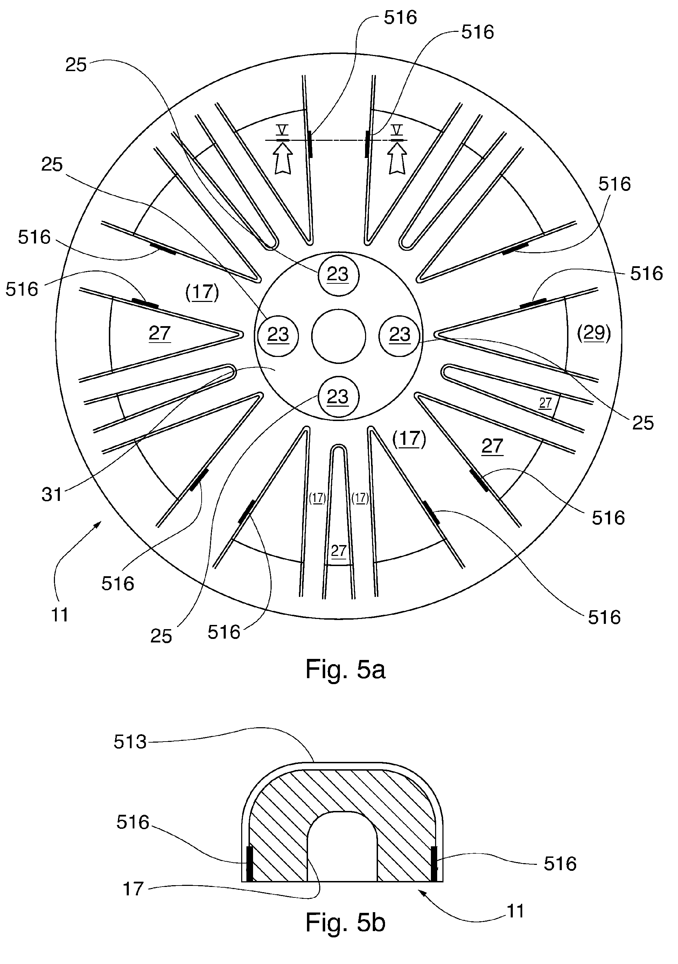

Figs. 5a and 5b show a fourth embodiment of the invention, where member 513 is held against rim 11 by joining areas 516 directly defined between said member 513 and a portion of rim 11, located for instance in correspondence of spokes 17.

In that embodiment too joining areas 516 can be defined by means of a bonding agent, a double-adhesive tape, a strip of Velcro or the like.

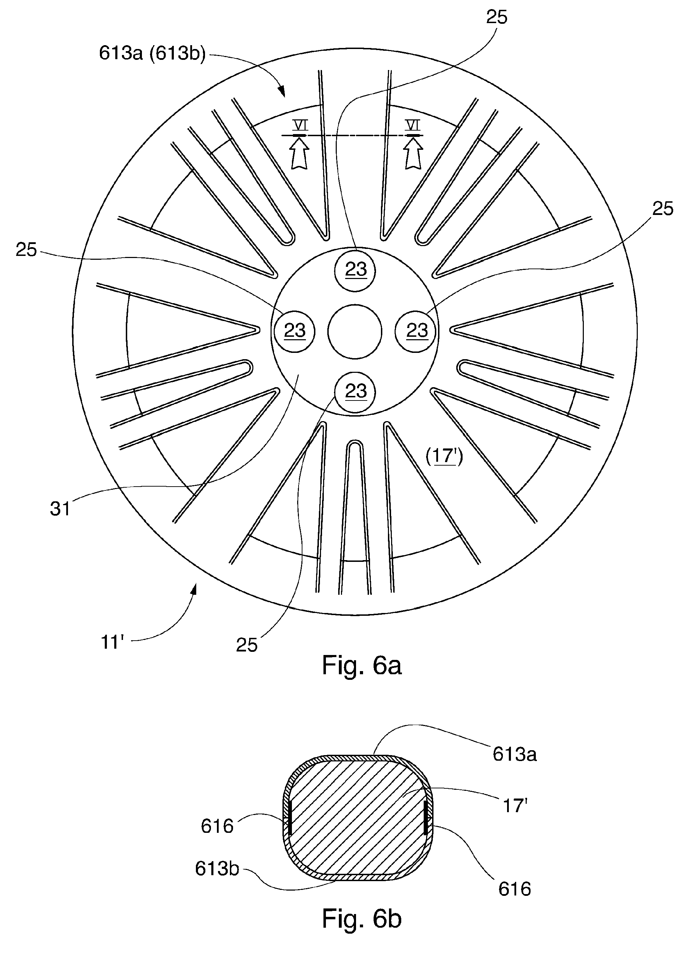

Figs. 6a and 6b show a fifth embodiment of the invention, where the protective cover is applied to rim 11' of a two-wheel vehicle and therefore is preferably provided on both rim faces.

In the illustrated example, a pair of members 613a, 613b will be associated with rim 11' through joining areas 616 defined by means of a bonding agent, a double-adhesive tape, a strip of Velcro or the like.

In the alternative, member 613a, 613b forming the protective cover can also be equipped with male-female engagement means, in order to enable associating together two members 613a, 613b, by sandwiching spokes 17' of vehicle rim 11' between them.

Depending on the shape of the vehicle rim to be protected, the protective cover, according to the described variants, can cover central region 31 of rim 11, 11' at which the rim is secured to the hub by means of screws and corresponding nuts or bolts, or it can leave such region uncovered.

The protective cover can also be held against rim 11, 11' thanks to securing nuts or bolts 23 provided for locking the rim on the vehicle hub, which nuts or bolts will retain the cover in correspondence with bored seats 25 provided in the cover.

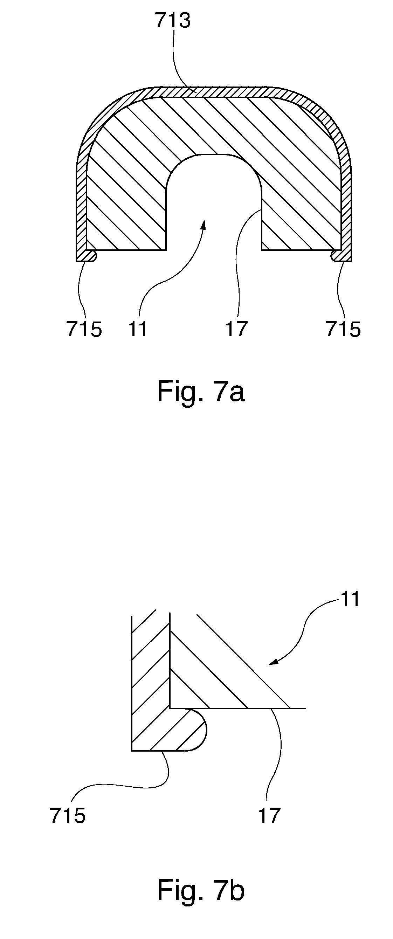

Referring to Figures 7a and 7b, a sixth embodiment of the invention is shown, where the protective cover consists of a member 713 and includes securing means 715 that preferably are integrally formed with member 713. Said securing means 715 directly engage said rim 11 (a spoke 17 of said rim, in the example depicted in Fig. 7a), thereby holding member 713 against rim 11.

Thanks to the resiliency of the structure of member 713, the engagement between securing means 715 of member 713 and rim 11 takes place by applying a slight pressure.

Said securing means 715 may consist of separate teeth, directed in L-shape towards the inside of member 713 and preferably arranged at the level of spokes 17 and/or of peripheral edge 29 of rim 11, or they can extend in continuous manner thereby defining an edge that is directed in L-shape towards the inside of member 713 and extends along the whole or a part of the perimeter of member 713.

Advantageously, since securing means 715 are integrally formed with member 713, no additional securing means is required to secure the cover of the invention to rim 11, and it will be sufficient to press member 713 against rim 11 in axial direction in order the resilient flanks of member 713 become deformed to such an extent that they internally accommodate rim 11, locking it through securing teeth or edge 715. Similarly, by applying an axial pull on member 713, it is possible to separate it from rim 11 thanks to the resiliency of the material, which becomes deformed and disengages securing teeth or edge 715 from the rim.

In this embodiment of the invention too, the fastening of member 713 to rim 11 can possibly be reinforced by means of a bonding agent, a double-adhesive tape, a strip of Velcro, plug-in push-buttons or the like, arranged in various manners between the surfaces of the rim and the cover.

Advantageously, member 713 and integrated securing means 715 can be manufactured from plastics through a single moulding process.

Advantageously, thanks to the resilience of the structure of member 713, the protective cover can be frequently replaced by merely releasing securing means 715.

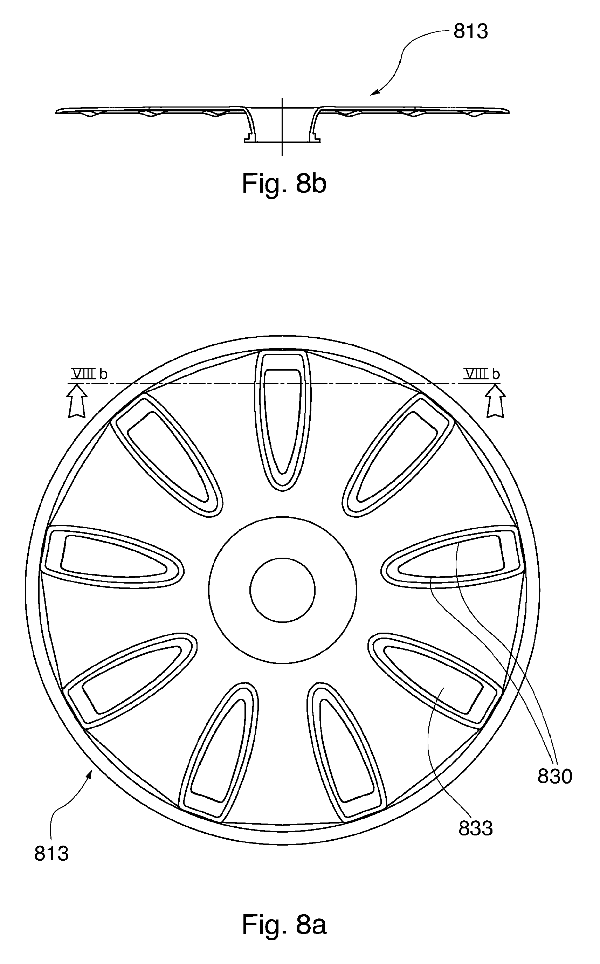

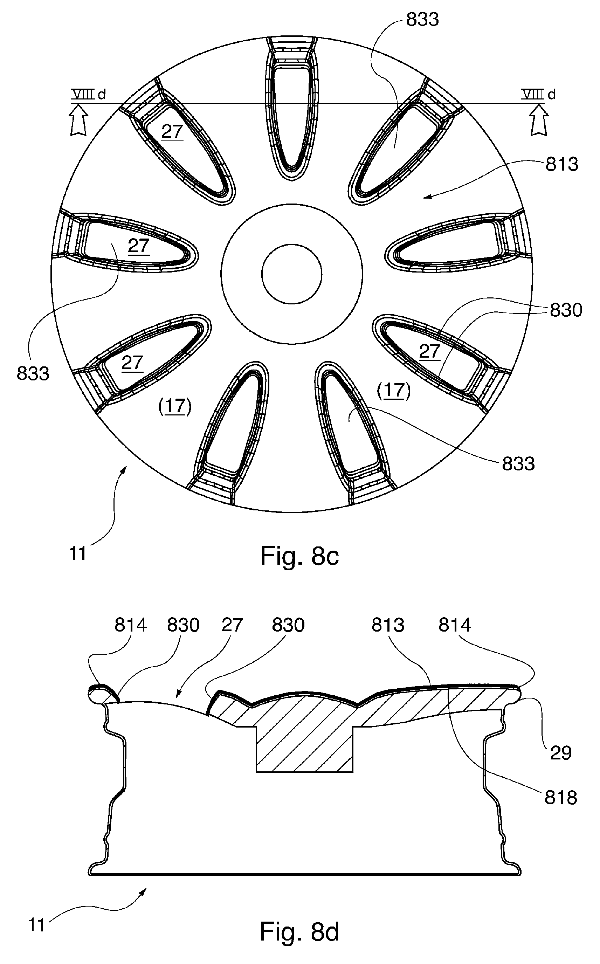

Referring now to Figures 8a to 8d, a seventh embodiment of the invention is shown, where the protective cover comprises a member 813 having, on the surface intended to face rim 11, a plurality of projections 814 intended to keep member 813 slightly spaced apart, preferably by about 1 mm, from the surface of rim 11, at least at some locations.

That feature aims at defining corresponding passages 818 for dirt that, if it penetrates between member 813 and the rim, can be more easily removed by gravity or when washing the vehicle.

Since most of dirt accumulating on the rim comes from the internal region accommodating the brake and the driving joints, which are known sources of dust and oil deposits, projections 814 will be advantageously provided in correspondence with peripheral edge 29, and they will be missing in internal regions 830 of member 813, substantially corresponding with the perimeter of openings 833 existing in correspondence of empty spaces 27 in rim 11 defined between spokes 17, so as to prevent dirt from entering passages 818, while however making dirt removal easier, especially during washing operations.

Moreover, a sealing edge or lip or gasket, which are preferably integrated into member 213, but which can also be separate therefrom, may be advantageously provided at such internal regions 830. Such elements, by fitting to the rim profile, ensure a better seal against dust and dirt.

Advantageously, the protective member can be manufactured from plastics through a moulding process in which a mould reproducing as accurately as possible the pattern of the rim to be covered is used.

The mould shape can be readily obtained by exploiting the mathematical data provided by the manufacturer of the same rim, which data have enabled manufacturing the rim mould, or by exploiting the result of a measurement carried out by a mechanical or optical tracing machine, capable of providing substantially the same mathematical data through a measurement of the rim surface.

Moreover, according to the invention, the material of the protective member is preferably transparent and colourless; yet, it is also possible to confer a particular chromatic tone to the cover, while preserving the transparency or making the cover partly or wholly opaque.

The protective member can be made for instance of ABS, Plexiglas, polycarbonate, steel, stainless steel, and it can be chromium-plated or have other chromatic effects.

According to the invention, the protective member is preferably substantially disc-shaped or spider-shaped, and has a thickness preferably ranging from 1 to 5 mm, for instance 2 mm. Moreover, the protective member can be cut without excessive difficulty to remove possible excess portions, for instance in order to accommodate the balancing masses which are seamed on the rim edge and the size and location of which change from a wheel to another.

Advantageously, according to the invention, the protective cover can be frequently replaced by removing the securing brackets or the means provided according to the other embodiments of the invention. This possibility allows restoring the original aesthetic aspect of the rim whenever necessary, for instance when the cover is scratched or has become opaque with use.

## Claims

1. A protective cover for vehicle rims, **characterised in that** it comprises at least one member (213; ... ; 813) reproducing the pattern of the rim face to be protected, and securing means (215; .... ; 715) for holding said member (213; ... ; 813) in contact with the rim.

2. The cover as claimed in claim 1, wherein said member (213; ... ; 813) includes, on its face intended to face the rim, a plurality of projections (814) intended to keep the member (813) slightly spaced apart from the rim surface, at least at some locations.

3. The cover as claimed in claim 2, wherein corresponding passages (818) making dirt removal easier are defined between said member (813) and the rim.

4. The cover as claimed in claim 3, wherein said projections (814) will be advantageously provided at the peripheral edge of the rim, whereas they will be missing in the internal regions (830) of the member (813), substantially corresponding with the perimeters of the openings (833) existing in correspondence of the empty rim spaces defined between the spokes.

5. The cover as claimed in claim 1, wherein said member (213; ... ; 813) is superimposed to the rim spokes (17) and to the peripheral edge (29) defining the channel for mounting the tyre, while leaving the empty regions (27) between the spokes (17) uncovered.

6. The cover as claimed in claim 1, wherein said member (213; ... ; 813) is superimposed to the rim surface and is in contact therewith substantially everywhere, whereby the risk of breakings of said member is reduced.

7. The cover as claimed in claim 1, wherein said securing means include at least one bracket (215; ... ; 415) where at least one area for joining with said member (213; ... ; 813) is defined.

8. The cover as claimed in claim 7, wherein said bracket (215; ... ; 415) has a substantially U-shaped body in which a central portion (215a; 215'a) and two end portions (215b; 215'b) are defined, each end portion having a joining area obtained by means of a window (215c; 215'c) that can be engaged by a respective tooth (221) of a plurality of teeth provided along the perimeter of the member (213; ... ; 813).

9. The cover as claimed in claim 8, wherein said windows (215c; 215'c) partially extend also along said central portion (215a; 215'a).

10. The cover as claimed in claim 7, wherein said bracket (215; ... ; 415) has a rectilinear body (315a) provided with a pair of windows (315c) located at opposite ends, and wherein said member (213; ... ; 813) is equipped with a plurality of legs (320) each comprising an engagement tooth (321) engaging one of said windows (315c).

11. The cover as claimed in claim 7, wherein said bracket (215; ... ; 415) has a substantially U-shaped body in which a central portion (415a) and two end portions (415b) are defined, each end portion having a joining area (416) obtained by means of a bonding agent, a double-adhesive tape, a strip of Velcro or the like.

12. The cover as claimed in claim 1, wherein said securing means comprise teeth directed in L-shape towards the inside of the member (713), said teeth being integrally formed with the member (213; ... ; 813).

13. The cover as claimed in claim 1, wherein said securing means are obtained by means of joining areas (516) directly defined between said member (213; ... ; 813) and a rim portion located for instance in correspondence of the spokes (17), said joining areas being defined by means of a bonding agent, a double-adhesive tape, a strip of Velcro or the like.

14. The cover as claimed in claim 7, wherein the brackets (215; ... ; 415) are made of plastics or metal and are slightly resilient in order to firmly hold said member (213; ... ; 813) against the rim, while enabling a slight deformation of the brackets during mounting.

15. The cover as claimed in claim 7, wherein an adhesive applied between said member (213; ... ; 813) and the surface of the rim, or other means intended to hold said member (213; ... ; 813) against the rim, such as plug-in push-buttons, strips of double-adhesive tape or strips of Velcro, are provided in addition to the brackets.

16. The cover as claimed in claim 1, wherein a pair of members (213; ... ; 813) is provided, each reproducing the pattern of a surface of the rim to be protected.

17. The cover as claimed in claim 16, wherein said pair of members (213; ... ; 813) are associated with the rim through joining areas (616) defined by means of a bonding agent, a double-adhesive tape, a strip of Velcro or the like.

18. The cover as claimed in claim 16, wherein said members (213; ... ; 813) forming the protective cover are equipped with male-female engagement means to enable associating together two members by sandwiching the vehicle rim between them.

19. The cover as claimed in any preceding claim, wherein said member (213; ... ; 813) leaves uncovered the central region of the rim at which the rim is secured to the hub by means of nuts or bolts.

20. The cover as claimed in any of claims 1 to 17, wherein said member (213; ... ; 813) covers the central region at which the rim is secured to the vehicle hub by means of securing nuts or bolts (23), and wherein said member (213; ... ; 813) is equipped with bored seats (25) for said nuts or bolts and is held against the rim thanks to said securing nuts or bolts (23) provided for locking the rim on the vehicle hub.

21. The cover as claimed in any preceding claim, wherein said member (213; ... ; 813) is made of plastics.

22. The cover as claimed in claim 21, wherein said member (213; ... ; 813) is transparent and colourless.

23. The cover as claimed in any of claims 1 to 20, wherein said member (213; ... ; 813) is made of metal, stainless steel, chromium-plated steel, or the like.

24. The cover as claimed in any preceding claim, wherein said member (213; ... ; 813) has a particular chromatic tone.

25. The cover as claimed in any preceding claim, wherein said member (213; ... ; 813) is preferably substantially disc-shaped or spider-shaped, and has a thickness preferably ranging from 1 to 5 mm, for instance 2 mm.
